(19) Europäisches Patentamt
European Patent Office
Office européen des brevets

(11) **EP 2 134 089 A1**

(12) **EUROPEAN PATENT APPLICATION**

(43) Date of publication:
**16.12.2009 Bulletin 2009/51**

(51) Int Cl.:
**H04N 5/913** (2006.01)    **H04N 9/64** (2006.01)

(21) Application number: **08305248.0**

(22) Date of filing: **11.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Thomson Licensing**
**92100 Boulogne-Billancourt (FR)**

(72) Inventors:
• **Sacre, Jean-Jacques**
**35410 Chateaugiron (FR)**

• **Bourdon, Pascal**
**35340 Le Grand Fougeray (FR)**
• **Vigouroux, Jean-Ronan**
**35000 Rennes (FR)**

(74) Representative: **Ruellan-Lemonnier, Brigitte**
**Thomson multimedia**
**Patent Department**
**46 Quai A. Le Gallo**
**92648 Boulogne Cedex (FR)**

(54) **Method to display colors using five primaries that allow colors to be metameric for most of the viewers**

(57) Two of the primaries G1', G2' are distributed in the green part of the visible spectrum, one G1' mainly distributed between 500 and 540 nm, the other one G2' mainly distributed between 540 nm and 585 nm. Thank to the specific spectral definition of the primaries B', G1', G2', R1' and R2', colors can be easily displayed that are metameric for most of the viewers, allowing notably anticamcorder defeat in movie theatres without prejudice for the quality of display for most of the viewers.

Fig.7

**Description**

The invention relates to a method to display images that provides an efficient anti-copy protection.

Colour images are generally displayed using three primaries : red, green and blue; the document WO2006/076174 (KODAK) discloses a display device having four primaries that are capable of producing metamerically matched color stimuli ; using this display device, spatial or sequential portions of an image or of a sequence of images (image sequence) are processed such that visually equivalent colors in two or more of these image portions are displayed using different combinations of primaries that differ globally in their spectral distribution. Such visually equivalent colors are then considered as metameric for the human eyes.

Colors that are metameric for the Human Vision System (HVS) are defined as colors having the same coordinates in a visual color space (i.e. as colors having the same visual color) although having different spectral wavelength distribution. Consequently, such metameric colors have the same coordinates in visual color spaces, as the 1931-CIE XYZ color space or the perceptually uniform LAB or LUV color spaces, and cannot then be theoretically differentiated by the human eye, although they have different spectral distributions. By extension, colors can be considered as metameric for a given color device, as an image capture device or an image reproduction device, if these colors, although having different spectral distribution, have the same coordinates in a color space which is associated with this device ; such a device cannot differentiate colors that are metameric for this color device.

Such an image display method able to produce colors that are metameric for the HVS, when used in a projection display in a movie theater, can be very useful to defeat camcorder piracy, as disclosed in WO2006/076174 (already quoted), WO2004/040899 (Qdesign), EP1590783 (PHILIPS) and EP1414250 (SONY). As a matter of fact, if at least some portions of images or portions of image sequences are displayed using colors that are metameric for the HVS but not metameric for the image capture devices, the captured images or image sequences would be then seriously jammed, then preventing their piracy.

But, it has been experienced that colors that are displayed using different spectral distribution and that should be theoretically metameric for the HVS are often not actually seen as exactly the same visual color by different viewers ; several reasons may cause this discrepancy between the basic theory and the actual physics of the human eyes, for instance :

- ageing of the retina and of the eye lens (yellowing): the colors that are metameric for someone's eyes will not be metameric any more a few years later : metamerism varies according to the age of individuals;
- distributions of the different types of visual sensors differ according to different part of the retina, as the fovea (about 0.2 mm large), the central retina (about 6 mm large) around the fovea, and the peripherical retina around the central retina where there is practically no cones any more but rods as visual sensors ; consequently, colors that are viewed as metameric under a given viewing angle will not be perceived as metameric according to another viewing angle ; metamerism varies according to the viewing angle;
- abnormal human vision (as, for instance, the so-called "anomalous trichomats") : eyes of approximately 4% of the human individuals have deficiencies for some visual sensors, then altering the spectral sensitivity;
- variations in protein composition at the surface of the retina that causes some "shift" of color perception according to different individuals ; consequently, colors that are metameric for someone's eyes may not be metameric for somebody else's eyes.

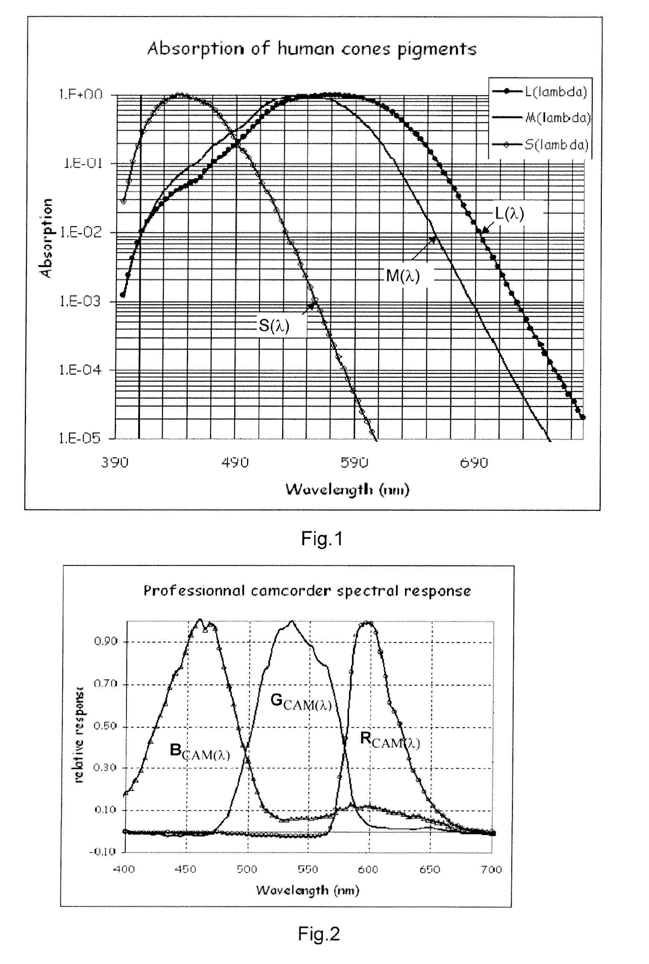

The spectral sensitivities of the three types $C_L$, $C_M$, $C_S$ of standard visual sensors of the central retina, i.e. the three types of retinal cones, have been actually known for a few years, giving respectively three color matching functions $L(\lambda)$, $M(\lambda)$, $S(\lambda)$ having their maximum respectively in long, middle and short wavelengths of the visible spectrum; these three color matching functions $L(\lambda)$, $M(\lambda)$, $S(\lambda)$ are illustrated on figure 1 and differs from the three color matching functions $X(\lambda)$, $Y(\lambda)$, $Z(\lambda)$ of the 1931CIEXYZ standard color space; based on these three color matching functions $L(\lambda)$, $M(\lambda)$, $S(\lambda)$, a so-called LMS visual color space have been built ; the coordinates L, M, S of any color having its spectral distribution $C(\lambda)$ may then be calculated using these three functions and may be regarded as directly related to the signals emitted by each type $C_L$, $C_M$, $C_S$ of cones. The advantage of the LMS visual colorimetry, compared to other visual colorimetry as the XYZ one, is its direct bond with the three actual retinal signals which are at the origin of perceptions of the colors by the human eyes.

As quoted above, quite a significant part of the human beings have abnormal human vision, among which the so-called "anomalous trichromats" are the more numerous : 3.15% of human beings (5.9% of men + 0.4% of women) have a partial deficiency for one type of cone, in majority for cones $C_L$ and/or $C_M$ having color matching functions respectively in long and/or middle wavelengths ; Vivianne Smith and Joel Pokorny have evaluated the color matching functions in long and/or middle wavelengths for anomalous trichromats : respectively $L_{POK}(\lambda$ and $M_{POK}(\lambda)$ that are translated between the "normal" $L(\lambda)$ and $M(\lambda)$ color matching functions.

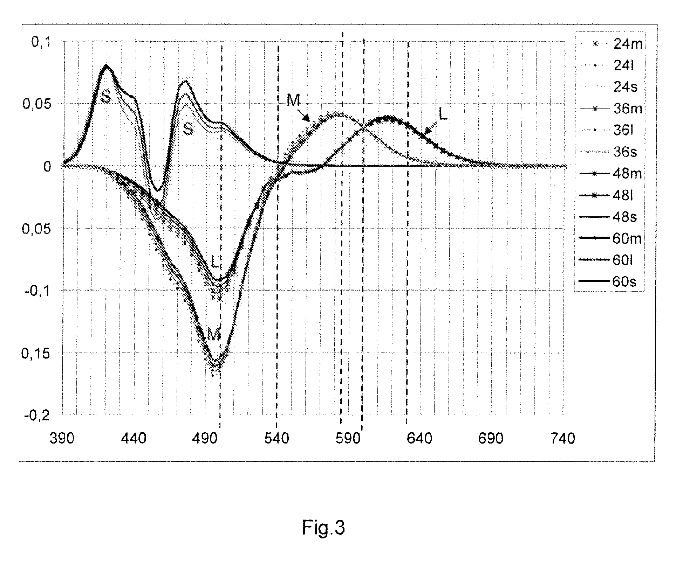

As quoted above, the age of the human beings and the angle of vision of a color causes variations into the three color matching functions L(λ), M(λ), S(λ) of a human eye, as illustrated on figure 3 which shows more precisely:

- a first group of curves referenced "L" showing the differences between L(λ) at a viewing angle of 10° and L(λ) at a viewing angle of 2° for different ages 24, 36, 48 and 60 years,
- a second group of curves referenced "M" showing the differences between M(λ) at a viewing angle of 10° and M(λ) at a viewing angle of 2° as presented for different ages 24, 36, 48 and 60 years,
- a third group of curves referenced "S" showing the differences between S(λ) at a viewing angle of 10° and S(λ) at a viewing angle of 2° as presented for different ages 24, 36, 48 and 60 years.

Most of the above data that have been used to draw these curves can be calculated by using an EXCEL spreadsheet prepared by Mark Fairchild, from the RIT Munsell Color Science Laboratory, and entitled "Computation of Cone Fundamentals (i.e. Color Matching Functions) in Terms of Energy for Various Field Sizes and Ages Based on CIE 170-1:2006".

An object of the invention is to provide a definition of a set of more than three primary colors that allow displaying colors that are metameric for the largest part of the human eyes, whatever is the age, the angle of view, the anomalies, and the "shift", in order to be able to display large gamut of colors using different spectral distributions for identical visual colors, and, if possible, in order to maximize the difference that would be perceived by camcorders, for anticamcorder defeat purposes. In brief, the concern is to achieve the best compromise to minimize all the above mentioned variations of metamerism visual perceptions.

For this purpose, the subject of the invention is a method for display an image or a sequence of images using at least a first blue primary, a second green primary, a third green primary and a fourth red primary, said different primaries having different spectral distributions, wherein :

- the spectral distribution of the first blue primary has a high cut-off wavelength below 500 nm,
- the spectral distribution of the second green primary has a higher luminous intensity in the range of wavelengths comprised between 500 nm and 540 nm than in the range of wavelengths comprised between 540 nm and 585 nm,
- the spectral distribution of the third green primary has a higher luminous intensity in the range of wavelengths comprised between 540 nm and 585 nm than in the range of wavelengths comprised between 500 nm and 540 nm,
- the spectral distribution of the fourth red primary has a low cut-off wavelength above 585 nm.

A spectral distribution of a given primary have a higher luminous intensity in a first range of wavelengths than in a second range of wavelengths when the integral of the luminous intensity in the first range is higher than the integral of the luminous intensity in the second range.

Thank to this spectral definition of these at least four primaries, it is easier and feasible to display the image (s) with colors that are metameric for the largest part of the human eyes, notably independent of the age of the viewers, and for a large range of viewing angles. It is easier and feasible to display large gamut of colors using different spectral distributions for identical visual colors.

Preferably, the display method uses a fifth red primary wherein :

- the spectral distribution of the fourth red primary has a higher luminous intensity in the range of wavelengths comprised between 600 nm and 630 nm than in the range of wavelengths comprised between 630 nm and 730 nm,
- the spectral distribution of the fifth red primary has a higher luminous intensity in the range of wavelengths comprised between 630 nm and 730 nm than in the range of wavelengths comprised between 600 nm and 630 nm.

Thank to this spectral definition of these at least five primaries, and specifically to the spectral definition of the fifth primary in the deep red part of the visible range of wavelength, the difference that are perceived by most of the camcorders between visually metameric colors in the images displayed by using the method according to the invention can be easily maximized.

Preferably, except for the said first blue primary, none of the other primaries that are used for display have a low cut-off wavelength below 500 nm.

Preferably, the display method comprises using different combinations of said primaries to display identical colors in said image and/or to display identical colors in different images of said sequence of images.

When used for the same colors of a given image, the method will provide a spatial variation of the spectral distribution of these same colors. When used for the same colors in different images of a given sequence of images, the method will provide a temporal variation of the spectral distribution of these same colors.

For instance, if a first spatial portion of an image to display comprises a first set of colors to display, and if a second spatial portion of the same image to display comprises a second set of colors to display, colors that belong both to the first set and to the second set will be displayed using different combinations of the above-defined primaries such that the spectral distribution of a color of the first set will differ from the spectral distribution of the same identical color of the second set, then providing **spatial variation of** the spectral distribution of the same colors in the image to display.

For instance, if a first temporal portion of a sequence of images to display comprises a first set of colors to display, and if a second temporal portion of the same sequence of images to display comprises a second set of colors to display, colors that belong both to the first set and to the second set will be displayed using different combinations of the above-defined primaries such that the spectral distribution of a color of the first set will differ from the spectral distribution of the same color of the second set, then providing **temporal variation of** the spectral distribution of the same identical colors in different images of the sequence of images to display.

Because different spectral distributions are used to display the same colors, i.e. colors having the same coordinates in a visual color space, these colors are then metameric for the human eyes. Then, when such a method is used, notably to defeat camcorder piracy, the variations of metamerism visual perceptions, as those previously mentioned, are advantageously minimized.

Preferably, the component of the first blue primary are equal in said different combinations of said primaries that are used to display identical colors. Advantageously, any variation of visual perception in the range of wavelengths below 500 nm is then avoided.

The subject of the invention is also an image display device comprising imagers, illumination means of said imagers that are adapted to provide a first basic blue primary having a main spectral distribution within the range of 400 nm to 500 nm, a second basic green primary having a main spectral distribution within the range of 500 nm to 585 nm, and a third basic red primary having a main spectral distribution within the range of 585 nm to 730 nm, and means to image said imagers on a projection screen, wherein the image display device comprises also a color wheel having two groups of optical filter segment(s) that is interposed on the optical path between said illumination means and said imagers and that is adapted to provide successively, from said second green basic primary, through the first group of optical filter segment(s), a second green primary having a spectral distribution with a higher luminous intensity in the range of wavelengths comprised between 500 nm and 540 nm than in the range of wavelengths comprised between 540 nm and 585 nm, and, through the second group of optical filter segment(s), a third green primary having a spectral distribution with a higher luminous intensity in the range of wavelengths comprised between 540 nm and 585 nm than in the range of wavelengths comprised between 500 nm and 540 nm.

Preferably, said color wheel is also adapted to provide successively, from said third basic red primary, through the first group of optical filter segment(s), a fourth red primary having a higher luminous intensity in the range of wavelengths comprised between 600 nm and 630 nm than in the range of wavelengths comprised between 630 nm and 730 nm, and, through the second group of optical filter segment(s), a fifth red primary having a higher luminous intensity in the range of wavelengths comprised between 630 nm and 730 nm than in the range of wavelengths comprised between 600 nm and 630 nm.

Preferably, the optical filter segment(s) of the two groups of said color wheel have the same transmittivity in the range of wavelengths below 500 nm.

In a specific embodiment, each group of optical filter segment comprises only one optical filter which represents one half of the color wheel. When each group of optical filter segments comprises a plurality of optical filter segments, the optical filter segments of each group are preferably distributed regularly over the circumference of the color wheel such that any optical filter segment of one group is adjacent to two optical filter segments of the other group. Preferably, all optical filter segments of the same group are identical in size and in spectral characteristics.

In summary, according to the invention, two of the primaries are distributed in the green part of the visible spectrum, one mainly distributed between 500 and 540 nm, the other one mainly distributed between 540 nm and 585 nm. Thank to the specific spectral definition of the primaries, colors can be easily displayed that are metameric for most of the viewers, allowing notably anticamcorder defeat in movie theatres without prejudice for the quality of display for most of the viewers.

The invention will be more clearly understood on reading the description which follows, given by way of non-limiting example and with reference to the appended figures in which:

- Figure 1 represents the color matching functions L($\lambda$), M($\lambda$), S($\lambda$) in the standard LMS visual color space.
- Figure 2 represent the spectral sensitivities functions $R_{CAM}(\lambda)$, $G_{CAM}(\lambda)$ and $B_{CAM}(\lambda)$ of a camcorder to be defeated.
- Figure 3 represents the differences between color matching functions L($\lambda$), M($\lambda$), S($\lambda$) at a viewing angle of 10° and at a viewing angle of 2° into curves grouped by various ages distributed between 20 and 60 years.
- Figure 4 shows the spectrums of the three basic primaries of a digital video projector that is used in the image display device of figure 9 according to the invention.
- Figure 5 illustrates the spectral transmittivity of the two optical filter segments of the color wheel of the image display device of figure 9 according to the invention allowing obtaining the five primaries having the spectral distribution illustrated on figure 6.
- Figure 6 and 7 illustrated two examples of the spectral distribution of five primaries of the image display device of figure 9 according to the invention.
- Figure 8 illustrates two spectrums $S1$ ($\lambda$), $S2$ ($\lambda$) allowing displaying a white color using different combinations of the five primaries of the image display device of figure 9 according to the invention.
- Figure 9 is a schematic diagram of the image display device according to an embodiment of the invention.

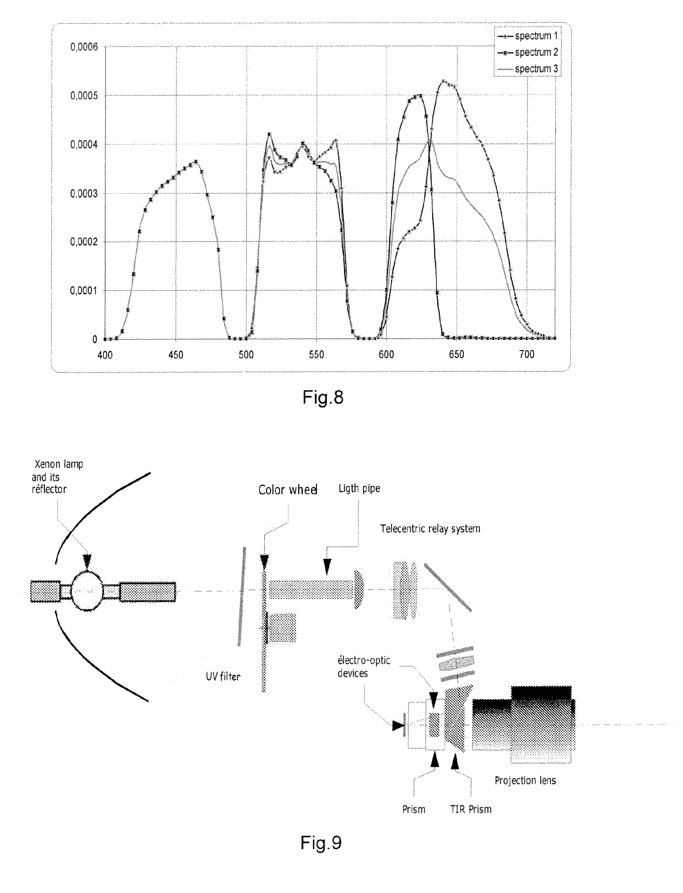

To implement the display method according to an embodiment of the invention, a video display device was used, based on the CP2000 digital video projector model manufactured by CHRISTIE Company, which is illustrated on figure 9. This digital video projector is basically able to display images by using three primaries, as the most usual display devices of the prior art.

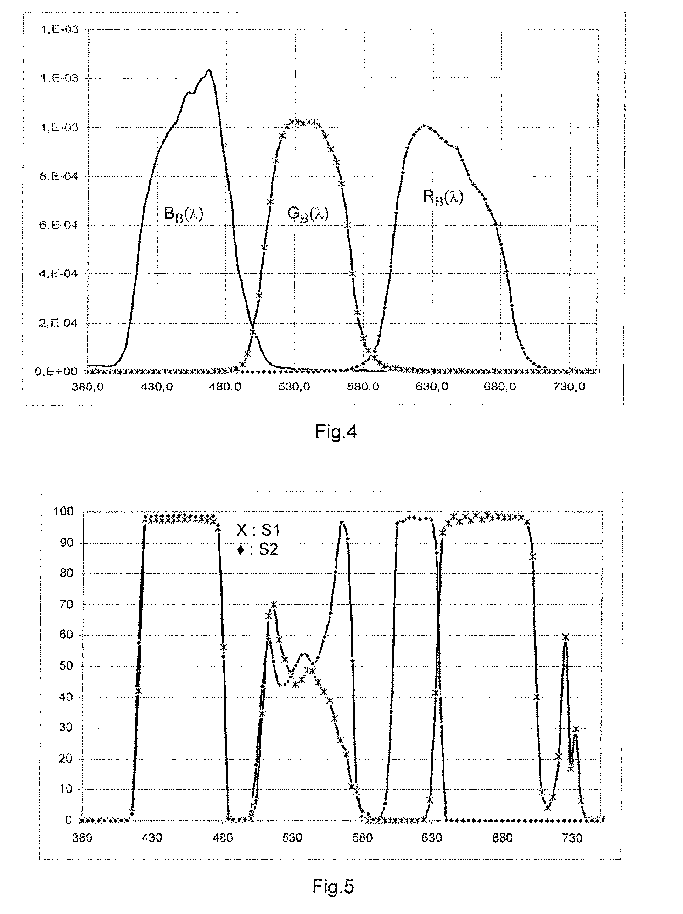

This digital video projector comprises three electro-optic micro-mirror imagers, illumination means of each of these electro-optic imagers that are adapted to provide three basic primaries having a spectral distribution that is illustrated on figure 4 : a first basic blue primary having a main spectral distribution $B_B(\lambda)$ within the range of 400 nm to 500 nm, a second basic green primary having a main spectral distribution $G_B(\lambda)$ within the range of 500 nm to 585 nm, and a third basic red primary having a main spectral distribution $R_B(\lambda)$ within the range of 585 nm to 730 nm, and means to image said electro-optic imagers on a projection screen. This digital video projector is designed such that each imager is illuminated, originally directly, by only one basic primary. This digital video projector comprises also a "Total-Internal-Reflexion" (TIR) prism to allocate each illuminating basic primary to each electro-optic imager, to recombine the images of each illuminated electro-optic imager, and a projection lens to image the illuminated electro-optic imagers on a projection screen. A UV filter, a light pipe for integration purpose, and a telecentric relay system are interposed on the optical path of the illumination of the electro-optic imagers.

This video display device comprises also a color wheel with two optical filter segments that is adapted and positioned to partition each of the green and the red basic primaries into two different primaries, then providing finally five different primaries to display video images, i.e. sequence of images. Each optical filter segment represents one half of the color wheel. These two optical filter segments are adapted with the spectral distribution of the basic primaries to provide :

- a first primary B, being blue, having a spectral distribution with a high cut-off wavelength below 500 nm,
- a second primary G1, being green, having a spectral distribution with a higher luminous intensity in the range of wavelengths comprised between 500 nm and 540 nm than in the range of wavelengths comprised between 540 nm and 585 nm,
- a third primary G2, being green, having a spectral distribution with a higher luminous intensity in the range of wavelengths comprised between 540 nm and 585 nm than in the range of wavelengths comprised between 500 nm and 540 nm,
- a fourth primary R1, being red, having a spectral distribution with a low cut-off wavelength above 585 nm, and with a higher luminous intensity in the range of wavelengths comprised between 600 nm and 630 nm than in the range of wavelengths comprised between 630 nm and 730 nm,
- a fifth primary R2, being red, having a spectral distribution with a low cut-off wavelength above 585 nm, and with a higher luminous intensity in the range of wavelengths comprised between 630 nm and 730 nm than in the range of wavelengths comprised between 600 nm and 630 nm.

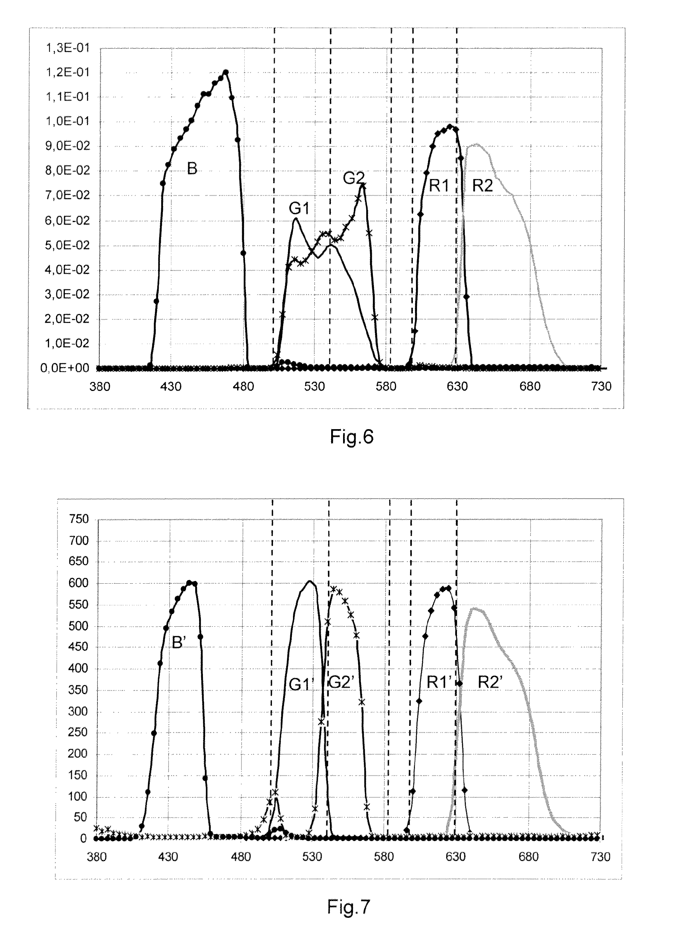

Figure 6 illustrates the spectral distribution of each of these primaries B, G1, G2, R1 and R2, according to a preferred embodiment of the invention. Figure 7 illustrates the spectral distribution of other primaries B', G1', G2', R1', R2', according to a variant of the invention.

Figure 5 illustrates the spectral transmittivity of the two optical filter segments S1 (x symbols), S2 (♦ symbols) of the color wheel that is interposed on the optical path between the illumination means with their basic primaries as illustrated in figure 4 and the electro-optic imagers, adapted to obtain the five primaries B, G1, G2, R1, R2 having the spectral distribution illustrated on figure 6. The two optical filter segments have the same transmittivity in the range of wavelengths below 500 nm.

The video display device according to the invention is now designed such that the first imager is illuminated only by the first blue primary, the second imager is illuminated successively by the second green primary and the third green primary, and the third imager is illuminated successively by the fourth red primary and the fifth red primary.

To be able to display images that are provided through usual RGB color data expressed in a standard RGB color space, this video display device comprises also means to process colors expressed in this standard RGB color space into colors expressed in the R1 R2G1 G2B color space dependant on the video display device. Each color expressed in this R1 R2G1 G2B color space has five components : a component B related to the first blue primary color, a component G1 related to the second green primary color, a component G2 related to the third green primary color, a component R1 related to the fourth red primary color, and a component R2 related to the fifth red primary color. Such color processing means are well known in the art : see for instance the documents US6648475, WO01/95544, US6256073, US6191826 and US6147720.

An image display method according to an embodiment of the invention will now be described, which uses the video display device described above. This display method basically uses different combinations of the five primaries as defined above to display some identical colors within an image and/or to display some identical colors distributed in different images of a sequence of images. Such a basic display method is disclosed for instance in the documents WO2006/076174, WO2004/040899, EP1590783 and EP1414250 that have been already quoted.

For instance, if an image $Im_1$ to display comprises a pixel $P_{Im\_1}$ having a given color A that is expressed as $R_A$, $G_A$, $B_A$ in the RGB color space, and another pixel $P'_{Im\_1}$ having the same, i.e. identical color A that is expressed as $R'_A=R_A$, $G'_A=G_A$, $B'_A=B_A$, this same color A will be displayed using different combinations of the above-defined five primaries : one combination $R1_A$, $R2_A$, $G1_A$, $G2_A$, $B_A$ to display the pixel $P_{Im\_1}$ and another combination $R1'_A \neq R1_A$, $R2'_A \neq R2_A$, $G1'_A \neq G1_A$, $G2'_A \neq G2_A$, $B'_A$ to display the other pixel $P'_{Im\_1}$ of the same image. Consequently, the spectral distribution of the color A used to display the pixel $P_{Im\_1}$ differs from the spectral distribution of the same color A used to display the other pixel $P'_{Im\_1}$. Using such a display method to display the image $I_{m1}$ then provides spatial variation of the spectral distribution of the same colors within this image.

Similarly, if an image $Im_1$ of a video sequence to display comprises a pixel $P_{Im\_1}$ having a given color A that is expressed as $R_A$, $G_A$, $B_A$ in the RGB color space, and if another image $Im_2$ of the same video sequence to display comprises a pixel $P''_{Im\_2}$ having the same color A that is expressed as $R''_A=R_A$, $G''_A=G_A$, $B''_A=B_A$, the same color A will be displayed using different combinations of the above-defined five primaries : one combination $R1_A$, $R2_A$, $G1_A$, $G2_A$, $B_A$ to display the pixel $P_{Im\_1}$ of the image $Im_1$ and another combination $R1''_A \neq R1_A$, $R2''_A \neq R2_A$, $G1''_A \neq G1_A$, $G2''_A \neq G2_A$, $B''_A$ to display the pixel $P''_{Im\_2}$ of the other image $Im_2$ of the same sequence. Consequently, the spectral distribution of the color A used to display the pixel $P_{Im\_1}$ of the image $Im_1$ differ from the spectral distribution of the same color A used to display the other pixel $P''_{Im\_2}$ of the other image $Im_2$. These two different spectral distributions are metameric. Preferably, the spatial position of these two pixels within each image is identical. Using such a display method to display successively the image $I_{m1}$ and the image $I_{m2}$ then provides temporal variation of the spectral distribution of the same colors within the same sequence.

In both situations above, the two different spectral distributions are visually metameric, because they are perceived as the same color by a viewer looking at the image(s) projected on the projection screen by the video display device. Because of the spectral definition of the five primaries according to the invention, it has been noticed that the different combinations of the five primaries as exemplified above may be easily adapted such they are perceived as the same color by most of the viewers, notably whatever their age and whatever the angle of view. It is believed that having two green primaries differentiated by their spectral distribution above and below 540 nm allow advantageously to compensate for the difference of perception of metameric colors. As a matter of fact, as can be seen on figure 3, 540 nm is the wavelength :

- below which the difference between $M(\lambda)$ at a viewing angle of 10° and $M(\lambda)$ at a viewing angle of 2° is negative, and below which the difference between $L(\lambda)$ at a viewing angle of 10° and $L(\lambda)$ at a viewing angle of 2° is also negative,
- above which the difference between $M(\lambda)$ at a viewing angle of 10° and $M(\lambda)$ at a viewing angle of 2° is positive.

Above 570 nm, i.e. far above 540 nm, the difference between $L(\lambda)$ at a viewing angle of 10° and $L(\lambda)$ at a viewing angle of 2° is also positive.

For most of the colors to display having a red component in the range of wavelengths above 585 nm that infers a positive difference for the $L(\lambda)$ and $M(\lambda)$ color matching functions according to the angle of view (see figure 3), a first green component in the range of wavelengths between 540 nm and 585 nm that infers also a positive difference for the $M(\lambda)$ and the $L(\lambda)$ color matching function according to the angle of view (see figure 3), and second green component in the range of wavelengths between 500 nm and 540 nm of this color that infers a negative difference for the $M(\lambda)$ and the $L(\lambda)$ color matching function according to the angle of view (see figure 3), many combinations can be generally found where the positive differences for the $L(\lambda)$ color matching functions that is inferred by the red component can be compensated by a negative difference for the $L(\lambda)$ color matching function that is inferred by the second green component, and where the positive differences for the $M(\lambda)$ color matching functions that is inferred by the first green component can be compensated by a negative difference for the $M(\lambda)$ color matching function that is inferred also by the second green component. It has to be pointed out that the range of wavelengths 540 nm to 585 nm in which the third green primary is concentrated corresponds to a range of wavelengths in which the difference between $L(\lambda)$ at a viewing angle of 10° and $L(\lambda)$ at a viewing angle of 2° is very small, then allowing to better separate the influence on the $L(\lambda)$ difference and the influence on the $M(\lambda)$ difference.

Then, most of the difference in spectral distribution between two metameric colors that produce positive difference for the L and/or M component above 540 nm can be compensated by increasing the "weight" of the second green primary having a large spectral distribution of light below 540 nm in order to produce a negative difference for the L and/or M component, and then to compensate the difference between the L and/or M component of the perceived color for the largest part of the human eyes, notably whatever is the age and the angle of view.

It has been noticed that the different combinations of the five primaries as exemplified above may be easily adapted such they are perceived as the same color by most of the viewers, not only whatever their age and the angle of view, but also whatever the viewers are anomalous trichomats or not, whatever any other usual "shift" in the spectral response of the human eye, as the "shift" produced by the variations in protein composition at the surface of the retina.

A **method** will now be described to determine the different combinations of the five primaries above that are suited to be perceived as the same color by viewers whatever their age between 36 years and 60 years, and whatever the angle of view between 2° and 10°. Man skilled in the art would easily extrapolate such a method for most of the viewers, whatever they are anomalous trichromat, and whatever other kind of usual shift in the spectral response of the human eye.

It is well known that there are a large plurality of spectral distributions or "spectrums" that may be perceived as the same color by a human eye, i.e. that are visually metameric. If we take any two of these metameric spectrums $S1(\lambda)$, $S2(\lambda)$, then the coordinates of these two spectrums $S1(\lambda)$, $S2(\lambda)$ are calculated in the visual LMS color space, using different color matching functions according to the age and to the angle of view of the viewer.

For instance, the M component of the $S1(\lambda)$ spectrum is calculated using different variations of the $M(\lambda)$ color matching functions : $M_{2°36y}(\lambda)$, $M_{2°48y}(\lambda)$, $M_{2°60y}(\lambda)$ respectively for 36, 48 and 60 years at an angle of view of 2°, $M_{10°36y}(\lambda)$, $M_{10°48y}(\lambda)$, $M_{10°60y}(\lambda)$ respectively for 36, 48 and 60 years at an angle of view of 10°. These color matching functions of the LMS color space can be found in the EXCEL spreadsheet prepared by Mark Fairchild that is quoted above and is entitled "Computation of Cone Fundamentals (i.e. Color Matching Functions) in Terms of Energy for Various Field Sizes and Ages Based on CIE 170-1:2006". According to the different $M(\lambda)$ color matching functions above, the corresponding M components of the $S1(\lambda)$ spectrum are then :

$$S1_{M2°36y} = \sum_{\lambda1}^{\lambda2} M_{2°36y}(\lambda) \times S1(\lambda) \times \Delta\lambda$$

$$S1_{M10°36y} = \sum_{\lambda1}^{\lambda2} M_{10°36y}(\lambda) \times S1(\lambda) \times \Delta\lambda$$

$$S1_{M2°48y} = \sum_{\lambda1}^{\lambda2} M_{2°48y}(\lambda) \times S1(\lambda) \times \Delta\lambda$$

$$S1_{M10°48y} = \sum_{\lambda1}^{\lambda2} M_{10°48y}(\lambda) \times S1(\lambda) \times \Delta\lambda$$

$$S1_{M2°60y} = \sum_{\lambda1}^{\lambda2} M_{2°60y}(\lambda) \times S1(\lambda) \times \Delta\lambda$$

$$S1_{M10°60y} = \sum_{\lambda1}^{\lambda2} M_{10°60y}(\lambda) \times S1(\lambda) \times \Delta\lambda$$

Using different variations of the $L(\lambda)$ color matching functions : $L_{2°36y}(\lambda)$, $L_{2°48y}(\lambda)$, $L_{2°60y}(\lambda)$ respectively for 36, 48 and 60 years at an angle of view of 2°, $L_{10°36y}(\lambda)$, $L_{10°48y}(\lambda)$, $L_{10°60y}(\lambda)$ respectively for 36, 48 and 60 years at an angle of view of 10°, and different variations of the $S(\lambda)$ color matching functions : $S_{2°36y}(\lambda)$, $S_{2°48y}(\lambda)$, $S_{2°60y}(\lambda)$ respectively for 36, 48 and 60 years at an angle of view of 2°, $S_{10°36y}(\lambda)$, $S_{10°48y}(\lambda)$, $S_{10860y}(\lambda)$ respectively for 36, 48 and 60 years at an angle of view of 10°, similar equations applies for the different L components of the $S1(\lambda)$ spectrum :

$S1_{L2°36y}$, $S1_{L10°36y}$, $S1_{L20°48y}$, $S1_{L10°48y}$, $S1_{L2°60y}$ and $S1_{L10°60y}$, and for the different S components of the S1 ($\lambda$) spectrum : $S1_{S2°36y}$, $S1_{S10°36y}$, $S1_{S2°48y}$, $S1_{S10°48y}$, $S1_{S2°60y}$ and $S1_{S10°60y}$.

Similar equations also applies for the different M components of the Similar equations also applies for the different M components of the $S2$ ($\lambda$) Spectrum : $S2_{M2°36y}$, $S2_{M10°36y}$, $S2_{M2°48y}$, $S2_{M10°48y}$, $S2_{M2°60y}$ and $S2_{M10°60y}$, the different S components of the $S2$ ($\lambda$) spectrum : $S2_{S2°36y}$, $S2_{S10°36y}$, $S2_{S2°48y}$, $S2_{S10°48y}$, $S2_{S2°60y}$ and $S2_{S10°60y}$, and the different L components of the $S2$ ($\lambda$) spectrum : $S2_{L2°36y}$, $S2_{L10°36y}$, $S2_{L2°48y}$, $S2_{L10°48y}$, $S2_{L2°60y}$ and $S2_{L10°60y}$.

Viewed gaps between any component of the $S1$ ($\lambda$) spectrum and the same component of the $S2$ ($\lambda$) spectrum in the LMS color space are now calculated as follows: where « *TYPE* » is : *M2°36y, M10°36y, M2°48y, M10°48y, M2°60y, M10°60y, S2°36y, S10°36y, 52°48y, S10°48y, S2°60y, S10°60y, L2°36y, L10°36y, L2°48y, L10°48y, L2°60y, L10°60y.*

To obtain the two spectral distributions that are adapted to be perceived as the same color by viewers whatever their age between 36 years and 60 years, and whatever the angle of view between 2° and 10°, all these gaps should be minimized.

The capture of these two spectral distributions $S1$ ($\lambda$), $S2$ ($\lambda$) by a camcorder should now be considered. Each color which is captured by a camcorder is outputted as three coordinates R, G, B in the RGB color space dependant on this camcorder. If $R_{CAM}(\lambda)$, $G_{CAM}(\lambda)$ and $B_{CAM}(\lambda)$ are the spectral sensitivities of each of the three color channels of a camcorder to be defeated, as illustrated on figure 2, then the spectral distribution $S1$ ($\lambda$) is captured as three coordinates $B_{S1}$, $G_{S1}$, $R_{S1}$, and then the spectral distribution $S2$ ($\lambda$) is captured as three coordinates $B_{S2}$, $G_{S2}$, $R_{S2}$, these coordinates being defined as follows :

$$B_{S1} = \sum_{\lambda 1}^{\lambda 2} B_{CAM}(\lambda) \times S1(\lambda) \times \Delta\lambda$$

$$G_{S1} = \sum_{\lambda 1}^{\lambda 2} G_{CAM}(\lambda) \times S1(\lambda) \times \Delta\lambda$$

$$R_{S1} = \sum_{\lambda 1}^{\lambda 2} R_{CAM}(\lambda) \times S1(\lambda) \times \Delta\lambda$$

$$B_{S2} = \sum_{\lambda 1}^{\lambda 2} B_{CAM}(\lambda) \times S2(\lambda) \times \Delta\lambda$$

$$G_{S2} = \sum_{\lambda 1}^{\lambda 2} G_{CAM}(\lambda) \times S2(\lambda) \times \Delta\lambda$$

$$R_{S2} = \sum_{\lambda 1}^{\lambda 2} R_{CAM}(\lambda) \times S2(\lambda) \times \Delta\lambda$$

Captured gaps between any coordinate of the $S1$ ($\lambda$) spectrum and the same coordinate of the $S2$ ($\lambda$) spectrum in the RGB color space of the camcorder are now calculated as follows :

$$Gap_B = B_{S2} - B_{S1}; \; Gap_G = G_{S2} - G_{S1}; \; Gap_R = R_{S2} - R_{S1}.$$

Two spectral distributions S1 (λ), S2 (λ) that will be used to display the same color are now chosen in a manner known per se among the large plurality of spectral distributions that display the same color, as the two spectral distributions S1 (λ), S2 (λ) that both minimize all the viewed gaps as defined above, and maximize all the captured gaps as defined above. From the two spectral distributions S1 (λ), S2 (λ) that are finally obtained, the two different combinations of primaries are obtained from the equations :

$$- \; S1(\lambda) = B1 * \left[ S_B(\lambda) \right] + G11 * S_{G1}(\lambda) + G12 * S_{G2}(\lambda) + R11 * S_{R1}(\lambda) + R12 * S_{R2}(\lambda) \, ,$$

where B1, G11, G12, R11 and R12 are the coordinates of the spectrum S1 (λ) in the R1 R2G1 G2B color space, and forms the first combination of primaries to display the color;

$$- \; S2(\lambda) = B2 * \left[ S_B(\lambda) \right] + G21 * S_{G1}(\lambda) + G22 * S_{G2}(\lambda) + R21 * S_{R1}(\lambda) + R22 * S_{R2}(\lambda) \, ,$$

where B2, G21, G22, R21 and R22 are the coordinates of the spectrum S2 (λ) in the R1 R2G1 G2B color space, and forms the second combination of primaries to display the same color, where $S_B(\lambda)$, $S_{G1}(\lambda)$, $S_{G2}(\lambda)$, $S_{R1}(\lambda)$, $S_{R2}(\lambda)$ are the color matching functions of, respectively, the first, the second, the third, the fourth and the fifth primary, as illustrated on figure 6.

An example of three visually-metameric spectrums allowing displaying the same white color is illustrated on figure 8.

The two, three or more combinations of the five primaries that are obtained are then adapted to be perceived as the same color by viewers whatever their age between 36 years and 60 years, and whatever the angle of view between 2° and 10°. Preferably, all the components of the first blue primary are equal for these different metameric combinations, as for the three combinations of figure 8, then inferring B1 = B2. Such a limitation allow to cancel any difference, either positive or negative, between the S(λ) color matching functions according to the angle of view or to the age of the viewers (see figure 3).

Preferably, to get the largest defeating effect on the camcorder, among the different metameric spectrums as the three illustrated on figure 8, the two spectrums having the largest difference in the fifth red primary component are chosen, as spectrums 1 and 2 on figure 8. As a matter of fact, as most of the camcorders are more sensitive than human eyes in the visual deep red region of wavelengths, i.e. between 630 nm and 730 nm, the fifth red primary is advantageously used to emphasize the defeating effect on camcorders.

From the above method, man skilled in the art would easily extrapolate a method that would suit most of the viewers, whatever they are anomalous trichromat, and whatever other kind of usual shift in the spectral response of the human eye.

It will be understood that the present invention has been described purely by way of example, and modifications of detail can be made without departing from the scope of the invention.

Features disclosed in the description, in the claims or in the drawings may, where appropriate be implemented in hardware, software, or a combination of the two.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination. Reference numerals appearing in the claims are by way of illustration only and shall have no limiting effect on the scope of the claims.

**Claims**

1. Method for display an image or a sequence of images using at least a first blue primary, a second green primary, a third green primary and a fourth red primary, said different primaries having different spectral distributions, **characterized in that :**

   - the spectral distribution of the first blue primary has a high cut-off wavelength below 500 nm,
   - the spectral distribution of the second green primary has a higher luminous intensity in the range of wavelengths comprised between 500 nm and 540 nm than in the range of wavelengths comprised between 540 nm and 585 nm,

- the spectral distribution of the third green primary has a higher luminous intensity in the range of wavelengths comprised between 540 nm and 585 nm than in the range of wavelengths comprised between 500 nm and 540 nm,

- the spectral distribution of the fourth red primary has a low cut-off wavelength above 585 nm.

2. Method for display according to claim 1 **characterized in that** it uses a fifth red primary and **in that** :

    - the spectral distribution of the fourth red primary has a higher luminous intensity in the range of wavelengths comprised between 600 nm and 630 nm than in the range of wavelengths comprised between 630 nm and 730 nm,

    - the spectral distribution of the fifth red primary has a higher luminous intensity in the range of wavelengths comprised between 630 nm and 730 nm than in the range of wavelengths comprised between 600 nm and 630 nm.

3. Method for display according to claim 1 or 2 **characterized in that,** except for the said first blue primary, none of the other primaries that are used for display have a low cut-off wavelength below 500 nm.

4. Method for display according to anyone of the previous claims **characterized in that** it comprises using different combinations of said primaries to display identical colors in said image and/or to display identical colors in different images of said sequence of images.

5. Method for display according to claim 4 **characterized in that** the component of the first blue primary are equal in said different combinations of said primaries that are used to display identical colors.

6. Image display device comprising imagers, illumination means of said imagers that are adapted to provide a first basic blue primary having a main spectral distribution within the range of 400 nm to 500 nm, a second basic green primary having a main spectral distribution within the range of 500 nm to 585 nm, and a third basic red primary having a main spectral distribution within the range of 585 nm to 730 nm, and means to image said imagers on a projection screen, **characterized in that** it comprises also a color wheel having two groups of optical filter segment (s) that is interposed on the optical path between said illumination means and said imagers and that is adapted to provide successively, from said second green basic primary, through the first group of optical filter segment(s), a second green primary having a spectral distribution with a higher luminous intensity in the range of wavelengths comprised between 500 nm and 540 nm than in the range of wavelengths comprised between 540 nm and 585 nm, and, through the second group of optical filter segment(s), a third green primary having a spectral distribution with a higher luminous intensity in the range of wavelengths comprised between 540 nm and 585 nm than in the range of wavelengths comprised between 500 nm and 540 nm.

7. Image display device according to claim 6 **characterized in that** said color wheel is also adapted to provide successively, from said third basic red primary, through the first group of optical filter segment(s), a fourth red primary having a higher luminous intensity in the range of wavelengths comprised between 600 nm and 630 nm than in the range of wavelengths comprised between 630 nm and 730 nm, and, through the second group of optical filter segment(s), a fifth red primary having a higher luminous intensity in the range of wavelengths comprised between 630 nm and 730 nm than in the range of wavelengths comprised between 600 nm and 630 nm.

8. Image display device according to claim 6 or 7 **characterized** the optical filter segment(s) of the two groups of said color wheel have the same transmittivity in the range of wavelengths below 500 nm.

Fig.1

Fig.2

Fig.3

Fig.4

Fig.5

Fig.6

Fig.7

Fig.8

Fig.9

**EUROPEAN SEARCH REPORT**

Application Number

EP 08 30 5248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/100589 A1 (BEN-DAVID ILAN [IL] ET AL) 27 May 2004 (2004-05-27) * the whole document * ----- | 1-3,6-8 | INV. H04N5/913 H04N9/64 |
| X | JP 2006 145863 A (OLYMPUS CORP) 8 June 2006 (2006-06-08) * the whole document * ----- | 1-3,6-8 | |
| D,X | US 2004/081318 A1 (BILOBROV SERGIY [CA] ET AL) 29 April 2004 (2004-04-29) * the whole document * ----- | 1-8 | |
| D,X | US 2006/152524 A1 (MILLER MICHAEL E [US] ET AL) 13 July 2006 (2006-07-13) * the whole document * ----- | 1-8 | |
| A | US 2003/234911 A1 (HORVATH LOUIS S [US] ET AL) 25 December 2003 (2003-12-25) ----- | | |

TECHNICAL FIELDS SEARCHED (IPC)

H04N

The present search report has been drawn up for all claims

| Place of search | Date of completion of the search | Examiner |
|---|---|---|
| Munich | 23 October 2008 | Lubach, Ernst |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 30 5248

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2008

| Patent document cited in search report | | Publication date | Patent family member(s) | | Publication date |
|---|---|---|---|---|---|
| US 2004100589 | A1 | 27-05-2004 | NONE | | |
| JP 2006145863 | A | 08-06-2006 | NONE | | |
| US 2004081318 | A1 | 29-04-2004 | AU 2003287229 A1 | | 25-05-2004 |
| | | | CA 2503835 A1 | | 13-05-2004 |
| | | | EP 1557031 A2 | | 27-07-2005 |
| | | | JP 2006505191 T | | 09-02-2006 |
| | | | KR 20050087789 A | | 31-08-2005 |
| | | | WO 2004040899 A2 | | 13-05-2004 |
| | | | US 2008187247 A1 | | 07-08-2008 |
| US 2006152524 | A1 | 13-07-2006 | WO 2006076174 A1 | | 20-07-2006 |
| US 2003234911 | A1 | 25-12-2003 | JP 2004086159 A | | 18-03-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006076174 A
- WO 2004040899 A
- EP 1590783 A
- EP 1414250 A
- US 6648475 B
- WO 0195544 A
- US 6256073 B
- US 6191826 B
- US 6147720 A